# EUROPÄISCHE PATENTSCHRIFT

(11) **EP 0 822 212 B1**
(45) Veröffentlichungstag und Bekanntmachung des Hinweises auf die Patenterteilung: **30.07.2003**
(21) Anmeldenummer: 97112909.3
(22) Anmeldetag: 26.07.1997
(51) Int. Cl.: C08G 59/50, C09D 163/00

(54) **Verfahren zur Herstellung eines Härtungsmittels für Expoxidharz-Systeme**
Process for the preparation of a curing agent for epoxy resins
Procédé pour la préparation d'un durcisseur pour des résines époxydes

(30) Priorität: 02.08.1996 DE 19631370
(43) Veröffentlichungstag der Anmeldung: 04.02.1998
(73) Patentinhaber: Surface Specialties Germany GmbH & Co. KG, 65203 Wiesbaden (DE)
(72) Erfinder: Marten, Manfred, 55126 Mainz (DE)
(74) Vertreter: Deckers, Hellmuth, Dr.

(56) Entgegenhaltungen:
- EP-A- 0 044 816
- EP-A- 0 127 915
- EP-A- 0 253 339
- EP-A- 0 324 950
- EP-A- 0 717 059
- WO-A-96/15172
- DE-A- 1 595 280
- DE-A- 1 912 485
- DE-A- 2 304 579
- US-A- 4 088 633
- DATABASE WPI Section Ch, Week 8332 Derwent Publications Ltd., London, GB; Class A21, AN 83-731294 XP002092560 & JP 58 109567 A (ASAHI CHEM IND CO LTD) , 29. Juni 1983

## Beschreibung

Epoxidharze, insbesondere solche, die aus Bisphenol A und Epichlorhydrin hergestellt werden, sind bekannte Rohstoffe für die Herstellung von qualitativ hochwertigen Gießharzen und Beschichtungsmassen. Diese mit Aminen gehärteten aromatischen Epoxidharze besitzen neben guter Chemikalien- und Lösungsmittelbeständigkeit eine gute Haftfestigkeit auf vielen Untergründen. Lösungsmittelfrei verarbeitbaren, möglichst niedrigviskosen Bisphenol-A-Epoxidharzen kommt eine erhebliche Bedeutung zu, beispielsweise für den Schutz und die Sanierung von Betonbauwerken, als Betonzusatzstoffe (ECC-Bereich, ECC = epoxide cement concrete), für elastische Klebstoffsysteme in verschiedenen Anwendungsbereichen und für die Lackierung unterschiedlichster Substrate. Die Härtung der Epoxidharze kann bei Verwendung von Aminen bei Umgebungstemperatur erfolgen.

Bekannt ist der Einsatz von Mannich-Basen aus Polyaminen, Phenolen und Formaldehyd aus den Dokumenten US-A 3 383 347, EP-A 0 042 617, US-A 3 751 471, EP-A 0 068 263 und EP-A 0 253 339. Mit Hilfe dieser Produkte gelingt es, bei tiefen Temperaturen gut durchgehärtete Epoxidbeschichtungen herzustellen, die sich durch hohe Pendelhärten nach kurzer Trocknungszeit auszeichnen. Für die beschleunigende Wirkung sind die phenolischen Hydroxylgruppen der freien oder gebundenen Phenolkörper verantwortlich.

Ein Nachteil dieser Systeme ist ein mehr oder weniger hoher Gehalt an freiem Phenol, der den Einsatz der Härter aufgrund der Umweltschutzgesetzgebung stark einengt.

In der Anmeldung EP-A 0 645 408 werden phenolfreie Härter beschrieben, die sehr gute Tieftemperatureigenschaften aufweisen. Die Härtung dieser Epoxidsysteme läuft rasch ab, d.h. dem Verarbeiter bleibt relativ wenig Zeit für die Applikation (vgl. dort Tab. 1 Topfzeit 15 bis 20 Minuten).

Wünschenswert sind EP-Systeme mit guten Tieftemperatureigenschaften, d.h. mit schneller Durchtrocknung bei Temperaturen unter 10 °C zu Beschichtungen mit hoher Pendelhärte, die aber eine längere Verarbeitungszeit gestatten. Gleichzeitig wird von solchen Härtern eine niedrigere Viskosität gefordert (d.h. unter 5000 mPa·s bei 25 °C) und daß sie eine trübungsfreie, wasserunempfindliche Oberfläche in der Beschichtung zeigen.

Überraschenderweise wurde nun gefunden, daß durch Addition von Monohydroxyaromaten an Polyepoxide aromatische hydroxyfunktionelle Epoxidverbindungen entstehen, die sich mit überschüssigem Amin zu relativ niedrigviskosen Härtern verarbeiten lassen, die die geforderten Eigenschaften haben.

Besonders überraschend ist, daß entgegen der bisherigen Annahme keine phenolischen Hydroxylgruppen erforderlich sind, um diese guten Tieftemperatureigenschaften zu erreichen. Dies ermöglicht die Herstellung von phenolarmen (restlicher Massenanteil an Phenol < 0,1 %) bzw. phenolfreien Produkten. Darüber hinaus werden mit diesen Härtern hervorragend chemikalienbeständige Beschichtungen und Formkörper erhalten, die in ihren Eigenschaften die guter Epoxid-Amin-Addukt-Härter übertreffen und in den meisten Lösungsmitteln gleichwertig mit Mannich-Basen-Härtern sind.

Selbst bei niedrigen Temperaturen (< 10 °C) zeigen die gehärteten Schichten bereits nach 24 Stunden Pendelhärten, die weit über denen von Epoxid-Amin-Addukt-Härtern liegen.

Gegenstand der Erfindung ist daher ein Verfahren zur Herstellung von Härtungsmitteln mit aktiven Aminwasserstoffgruppen für Epoxidharze, dadurch gekennzeichnet, daß im ersten Schritt polyfunktionellen Epoxide (A1) mit mehr als zwei 1,2-Epoxidgruppen pro Molekül mit Monohydroxyaromaten (A2) zu Verbindungen (A) mit durchschnittlich mehr als einer 1,2-Epoxidgruppe pro Molekül umgesetzt werden, wobei die Umsetzung solange geführt wird, bis der Epoxidgruppengehalt einen konstanten Wert erreicht hat, und die Verbindungen (A) im zweiten Schritt umgesetzt werden mit einem Überschußvon Aminen (B), die mindestens zwei primäre Aminogruppen oder mindestens eine primäre Aminogruppe und mindestens eine sekundäre Aminogruppe aufweisen.

Erfindungsgemäß werden die Härter hergestellt, indem die polyfunktionellen Epoxide (A1) und die Monohydroxyaromaten (A2), gegebenenfalls unter Zusatz von Katalysatoren, unter Inertgasatmosphäre erhitzt werden. Die Umsetzung wird solange geführt, bis der Epoxidgruppengehalt einen konstanten Wert (im allgemeinen ungefähr den theoretischen Wert) erreicht hat. Nach der Umsetzung der Polyepoxide mit den Monohydroxyaromaten können in einigen Fällen die Reaktionsprodukte noch geringe Mengen nicht umgesetzter Hydroxyaromaten enthalten. Diese werden durch Vakuumdestillation oder gegebenenfalls mit geeigneten Schleppmitteln entfernt.

Das Addukt wird gegebenenfalls mit Benzylalkohol soweit verdünnt, daß die Viskosität an die vorgesehene nächste Reaktionsstufe angepaßt ist. Statt Benzylalkohol lassen sich auch andere schwerflüchtige Alkohole wie zum Beispiel Methoxypropanol oder Phenyläthanol einsetzen. Üblicherweise beträgt das Massenverhältnis an Benzylalkohol zu Addukt 1:2 bis 1:5. Die Adduktlösung wird mit einem gegebenenfalls verdünnten Polyamin (B) in der Wärme (ca. 60 - 190 °C) umgesetzt, vorzugsweise bis zur völligen Abreaktion der Epoxidgruppen. Der spezifische Gehalt an aktiven Aminwasserstoffgruppen in dem Reaktionsprodukt aus (A) und (B) beträgt bevorzugt zwischen 8 und 20, besonders bevorzugt zwischen 10 und 18 mol/kg.

Als polyfunktionelle Epoxide (A1) eignen sich besonders die Epoxidharze auf der Basis von Bisphenol A und/oder Bisphenol F, sowie die Glycidylester mehrwertiger Carbonsäuren. Bevorzugt werden die Glycidyläther von mehrwertigen Alkoholen mit 2 bis 20 Kohlenstoffatomen oder ein- oder mehrkernigen Phenolen mit mindestens zwei phenolischen Hydroxylgruppen je Molekül, sowie die Polykondensate auf Basis von Novolakharzen. Die letzteren werden für die Erfindung besonders bevorzugt, insbesondere Novolake mit mindestens zwei Hydroxylgruppen, auf Basis von Phenol, Kresol, anderen Alkylphenolen mit mindestens zwei reaktiven Stellungen in ortho- oder para-Stellung zur phenolischen Hydroxylgruppe und 1 bis 8 Kohlenstoffatomen in den Alkylgruppen und Aldehyden ausgewählt aus aliphatischen Aldehyden mit 1 bis 8 Kohlenstoffatomen. Die besonders bevorzugten Komponenten (A1) sind daher Glycidyläther von Novolaken mit mindestens zwei Glycidyläthergruppen.

Geeignete Monohydroxyaromaten (A2) sind vor allem einkernige Hydroxyaromaten wie Phenol selbst, mindestens einfach substituierte Phenole wie o-, m- und p-Kresol, 2,6-Xylenol und dessen Isomere, Guajakol, Thymol, Carvacrol, p-tert.-Butylphenol, halogenierte Phenole, höher substituierte Alkylphenole mit 1 bis 20 Kohlenstoffatomen pro Alkyl-Substituent, Alkoxyphenole mit 1 bis 8 Kohlenstoffatomen pro Substituent, wobei die Alkyl- und Alkoxygruppen linear oder verzweigt sein können, mit Arylresten verknüpfte Phenole, deren Arylrest wiederum mit solchen Alkyl- und/oder Alkoxyresten substituiert ist, wobei der Arylrest mit dem Phenol über eine Brücke verknüpft ist ausgewählt aus direkter Bindung, einer Äther-, Thioäther-, Carbonyl-, Sulfonyl-, Alkylen-, Carbonamid- und Carbonyloxy-Brücke, wie z. B. mehrkernige nichtanellierte Phenole wie 2- und 4-Phenylphenol sowie mehrkernige anellierte Phenole wie 2- und 1-Naphthol.

Dabei werden die Komponenten (A1) und (A2) bevorzugt in solchen Mengen eingesetzt, daß die Komponente (A) im Mittel 1,3 bis 2,7 Epoxidgruppen pro Molekül aufweist. Besonders bevorzugt sind 1,5 bis 2,5, speziell 1,7 bis 2,2 Epoxidgruppen pro Molekül der Komponente (A).

Im Rahmen der Erfindung kann die Komponente (A) auch mit von (A) unterschiedlichen Epoxidharzen (A') abgemischt werden, die ebenfalls mindestens zwei Epoxidgruppen pro Molekül enthalten, insbesondere mit Epoxidharzen auf Basis von Bisphenol A oder Bisphenol F. Solche Mischungen sind besonders bevorzugt, wenn die Komponente (A1) ein Glycidyläther eines Novolaks mit mindestens zwei Glycidyläthergruppen ist. Insbesondere wird die Komponente (A') ausgewählt aus Glycidyläthern von Bisphenol A und Bisphenol F sowie deren Reaktionsprodukten mit weiterem Bisphenol A oder Bisphenol F mit einem spezifischen Epoxidgruppen-Gehalt von 4500 bis 6000 mmol/kg. Dabei beträgt der Massengehalt der Komponente (A) in solch einer Abmischung mindestens 50 %, bevorzugt mindestens 65 %, und besonders bevorzugt mindestens 80 %, bezogen auf die Masse der Mischung von (A) und den anderen Epoxidharzen (A').

Geeignete Amine (B) haben mindestens eine primäre Aminogruppe oder mindestens eine primäre und mindestens eine sekundäre Aminogruppe pro Molekül. Die Aminogruppen sind vorzugsweise an aliphatischen Kohlenstoffatomen gebunden. Bevorzugt sind Diamine mit zwei primären Aminogruppen, die gegebenenfalls auch noch weitere sekundäre oder tertiäre Aminogruppen enthalten können. Als Diamine eignen sich Alkylendiamine abgeleitet von Alkanen mit 2 bis 20 Kohlenstoffatomen wie Äthylendiamin, 1,2- und 1,3-Propylendiamin, 1,4-Diaminobutan, 1,5-Diaminopentan, 1,6-Diaminohexan, 2,2,4-und 2,4,4-Trimethyl-1,6-diaminohexan, Isophorondiamin, 1,2- und 1,4-Bis-(aminomethyl)-cyclohexan, Aminoäthylpiperazin und die isomeren Xylylendiamine, ferner die Polyiminoalkylendiamine, deren Alkylengruppen Äthylen- oder Propylen-Gruppen oder Mischungen davon sein können, wie Diäthylentriamin, Triäthylentetramin, Tetraäthylenpentamin und Pentaäthylenhexamin, und die Polyoxyalkylendiamine wie die unter dem Handelsnamen "® Jeffamine D-Serie" von Huntsman Chemical angebotenen. Besonders bevorzugt sind Isophorondiamin, m-Xylylendiamin, Aminoäthylpiperazin und Mischungen dieser Amine mit weiteren Aminen, wobei die ersteren jeweils mit Massenanteilen von mindestens 50 % in der Mischung vertreten sind. Geeignete Monoamine sind lineare oder verzweigte aliphatische Amine mit 4 bis 20 Kohlenstoffatomen, wie Aminobutan, Hexylamin, Octylamin, Dodecylamin und die Fettamine wie Stearylamin. Vorzugsweise werden diese Amine in Mischung mit den zuvor genannten Diaminen oder Polyaminen eingesetzt, wobei ein Massenanteil von bis zu 20 % an Monoaminen und mindestens 80 % an Di- und/oder Polyaminen in der Mischung vorliegt.

Durch Zumischen von aromatischen Hydroxysäuren zu dem erfindungsgemäß hergestellten Härter läßt sich die Topfzeit verkürzen; die Pendelhärte derart modifizierter Systeme steigt beim Abbinden bei tiefen Temperaturen viel rascher an als ohne diese Modifizierung. Geeignete aromatische Hydroxysäuren sind ein- und mehrkernige Säuren, die mindestens eine Carboxylgruppe und mindestens eine Hydroxylgruppe enthalten. Bevorzugt werden Hydroxybenzoesäuren wie Salicylsäure und p-Hydroxybenzoesäure eingesetzt, weiter auch 2,3- , 2,6- und 1,8-Hydroxynaphthoesäure; besonders bevorzugt wird Salicylsäure. Die Hydroxysäure wird in Massenanteilen von 0,2 bis 10 %, bevorzugt von 0,5 bis 8 % zugesetzt, bezogen auf die Masse der Mischung.

Durch Zumischen von primären aliphatischen Monoaminen mit 4 bis 20 Kohlenstoffatomen zu dem erfindungsgemäß hergestellten Härter läßt sich die Filmtrübung vor allem bei tiefen Temperaturen (unter 20 °C) verringern. Diese Amine werden in Massenanteilen von 0,2 bis 7 %, bevorzugt von 0,5 bis 5 % zugesetzt, bezogen auf die Masse der Mischung.

Die erfindungsgemäß hergestellten Härter lassen sich mit allen üblichen Epoxidharzen zusammen zur Herstellung von härtbaren Mischungen anwenden. Dabei lassen sich auch die Epoxidharze (A) einsetzen. Bevorzugt ist auch der Einsatz der erfindungsgemäß hergestellten Härter zusammen mit den Epoxidharzen ausgewählt aus Harzen abgeleitet von Bisphenol A und Bisphenol F sowie deren Mischungen. Dabei können auch Mischungen der Komponente (A) und anderen Epoxidharzen, wie z.B. solchen auf Basis von Bisphenol A, Bisphenol F oder deren Mischungen eingesetzt werden. Vorteilhaft kann das zu härtende Epoxidharz in Benzylalkohol gelöst eingesetzt werden.

Die Epoxidharz-Systeme, die die erfindungsgemäß hergestellten Härter enthalten, führen zu besonders chemikalienresistenten Beschichtungen, die z.B. als Lack auf Substrate wie Metalle, insbesondere Eisen, Stahl, Aluminium und Buntmetalle, Kunststoffe, Glas, Porzellan, Beton, Putze, Holz und Karton aufgebracht werden können. Ebenso ist die Anwendung als Deckschicht auf anderen Beschichtungen möglich.

### Beispiel 1

626 g ®Epikote 155 (Novolakglycidyläther, Shell, Funktionalität ca. 3,5) mit einem spezifischen Epoxidgruppen-Gehalt (SEG) von 5680 mmol/kg (Epoxidäquivalent "EV" von 176 g/mol) und 140 g Phenol (M=94,11 g/mol) werden in einem Vierhalskolben mit Rührer, Thermometer und Kühler unter Stickstoff auf 120 °C erwärmt. Dann werden 2,03 g Triphenylphosphin hinzugegeben. Durch exotherme Reaktion steigt die Temperatur nun innerhalb von 10 Minuten auf 165 °C, es wird weiter 3,4 Stunden bei 160 °C gehalten, bis der spezifische Epoxidgruppen-Gehalt 2810 mmol/kg (EV 356 g/mol) beträgt, und das Reaktionsprodukt mit 250 g Benzylalkohol verdünnt. Nach dem Abkühlen auf Raumtemperatur beträgt der spezifische Epoxidgruppen-Gehalt 2105 mmol/kg (EV 475 g/mol) und die Viskosität bei 25 °C ist 12205 mPa·s.

### Beispiel 2

20 g Benzylalkohol und 374 g m-Xylylendiamin (M=136,1 g/mol; spezifischer Gehalt an Amin-Wasserstoffatomen (SHG) 29,4 mol/kg; molare Masse geteilt durch die Anzahl der Aminwasserstoffatome "HAV"=34 g/mol) werden in einem Vierhalskolben mit Rührer, Thermometer und Kühler unter Stickstoff vorgelegt und auf 80 °C erwärmt. Dann werden innerhalb von 2 Stunden 406 g Epoxidharzlösung aus Beispiel 1 bei 80 °C zugegeben und 2,5 Stunden bei dieser Temperatur gehalten. Der auf Raumtemperatur abgekühlte Härter hat eine Aminzahl von 383 mg/g und eine Viskosität bei 25 °C von 3866 mPa·s. (Die Aminzahl (gemessen in mg/g) ist das Verhältnis derjenigen Masse an Kaliumhydroxid *m*_{KOH} in mg, die ebensoviel Säure zur Neutralisation verbraucht wie eine Masse *m*_{B} der zu charakterisierenden Substanz, zu der Masse *m*_{B} dieser Substanz in g.) Der spezifische Gehalt an Amin-Wasserstoffatomen ist 12,7 mol/kg (berechnet; HAV = 78,8 g/mol).

### Beispiel 3

Wiederholung von Beispiel 1, aber 4 Stunden bei 160 °C. Die Epoxidharzlösung hat einen spezifischen Epoxidgruppen-Gehalt von 2041 mmol/kg (EV von 490 g/mol) und eine Viskosität bei 25 °C von 15170 mPa·s.

### Beispiel 4

Wiederholung von Beispiel 2 mit dem Epoxidharz aus Beispiel 3. Der Härter hat eine Aminzahl von 385 mg/g und eine Viskosität bei 25 °C von 4250 mPa·s. Der spezifische Gehalt an Amin-Wasserstoffatomen ist 12,7 mol/kg (berechnet; HAV = 78,8 g/mol).

### Beispiel 5

110 g m-Xylylendiamin (M=136,1 1 g/mol; spezifischer Gehalt an Amin-Wasserstoffatomen 29,4 mol/kg; molare Masse geteilt durch die Anzahl der Aminwasserstoffatome "HAV"=34 g/mol) werden in einem Vierhalskolben mit Rührer und Thermometer und Kühler unter Stickstoff vorgelegt und auf 80 °C erwärmt. Dann werden innerhalb von 2 Stunden 120 g der Epoxidharzlösung aus Beispiel 3 bei 80 °C zugegeben und 2,5 Stunden bei dieser Temperatur gehalten. Nun werden nach beendeter Reaktion 6 g Octylamin hinzugefügt und homogen verrührt. Der auf Raumtemperatur abgekühlte Härter hat eine Aminzahl von *390* mg/g und eine Viskosität bei 25 °C von 3575 mPa·s. Der spezifische Gehalt an Amin-Wasserstoffatomen ist 13,1 mol/kg (berechnet; HAV = 76,5 g/mol).

### Beispiel 6

24 g Benzylalkohol und 267 g m-Xylylendiamin werden in einem Vierhalskolben mit Rührer, Thermometer und Kühler unter, Stickstoff vorgelegt und auf 80 °C erwärmt. Dann werden innerhalb von 2 Stunden 200 g der Epoxidharzlösung aus Beispiel 3 bei 80°C zugegeben und 2 Stunden bei dieser Temperatur gehalten. Der auf Raumtemperatur abgekühlte Härter hat eine Aminzahl von 449 mg/g und eine Viskosität bei 25°C von 630 mPa·s. Der spezifische Gehalt an Amin-Wasserstoffatomen ist 15,2 mol/kg (berechnet; HAV = 65,9 g/mol).

### Beispiel 7

626 g ®Epikote 155 (spezifischer Epoxidgruppen-Gehalt 5682 mmol/kg; EV 176 g/mol) und 254 g o-Phenylphenol (M=170,21 g/mol) werden in einem Vierhalskolben mit Rührer, Thermometer und Kühler unter Stickstoff auf 120 °C erwärmt. Dann werden 2,33 g Triphenylphosphin hinzugegeben. Durch exotherme Reaktion steigt die Temperatur nun innerhalb von 20 Minuten auf 170 °C, es wird weiter 3 Stunden bei 160 °C gehalten, bis der spezifische Epoxidgruppen-Gehalt 2519 mmol/kg (EV 397 g/mol) beträgt, und anschließend das Reaktionsprodukt mit 287 g Benzylalkohol verdünnt. Nach dem Abkühlen auf Raumtemperatur beträgt der spezifischer Epoxidgruppen-Gehalt 1862 mmol/kg (EV 537 g/mol) und die Viskosität bei 25 °C 22903 mPa·s.

### Beispiel 8

20 g Benzylalkohol und 374 g m-Xylylendiamin (M=136,1 g/mol; spezifischer Gehalt an Amin-Wasserstoffatomen 29,4 mol/kg; molare Masse geteilt durch die Anzahl der Aminwasserstoffatome "HAV"=34 g/mol) werden in einem Vierhalskolben mit Rührer, Thermometer und Kühler unter Stickstoff vorgelegt und auf 80 °C erwärmt. Dann werden innerhalb von 2 Stunden 406 g der Epoxidharzlösung aus Beispiel 7 bei 80 °C zugegeben und 2,5 Stunden bei dieser Temperatur gehalten. Der auf Raumtemperatur abgekühlte Härter hat eine Aminzahl von 387 mg/g und eine Viskosität bei 25 °C von 2895 mPa·s. Der spezifische Gehalt an Amin-Wasserstoffatomen ist 12,8 mol/kg (berechnet; HAV = 78,1 g/mol).

### Epoxidharze

| | | |
|---|---|---|
| ® Beckopox EP 140 | Bisphenol A - Epoxidharz flüssiges Standard-EP-Harz | SEG 5525 mmol/kg EV 181 g/mol |
| ® Beckopox EP 128 | Niedrigviskoses (reaktiv verdünntes) Bisphenol A-EP-Harz | SEG 5263 mmol/kg EV 190 g/mol |

### Epoxidharz-Härter

| | |
|---|---|
| ®Beckopox-Spezialhärter VEH 2841 | SHG 10,5 mol/kg |
| Modifizierter, beschleunigter Epoxid-Addukt-Härter | HAV 95 g/mol |
| | |
| ®Beckopox-Spezialhärter EH 624 | SHG 12,5 mol/kg |
| Phenolarmer, modifizierter Mannich-Basen-Härter | HAV 80 g/mol |
| | |
| ®Beckopox-Spezialhärter VEH 2621 | SHG 8,8 mol/kg |
| Modifizierter, beschleunigter Epoxid-Addukt-Härter | HAV 113 g/mol |

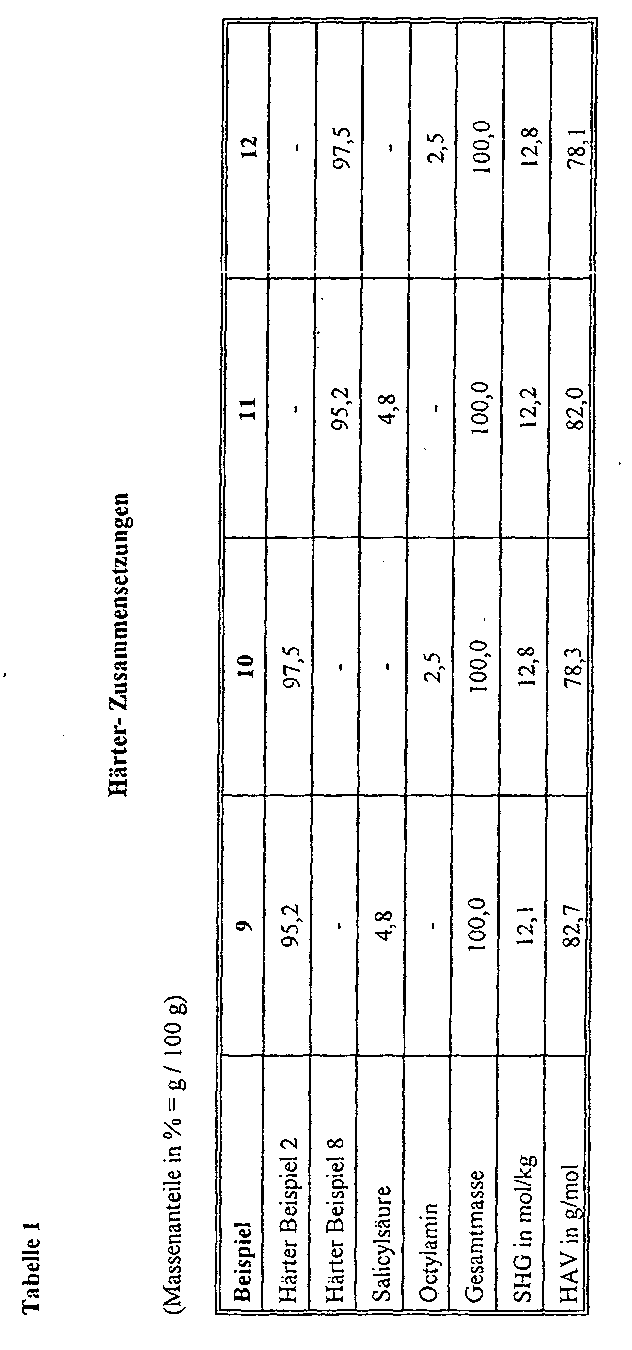

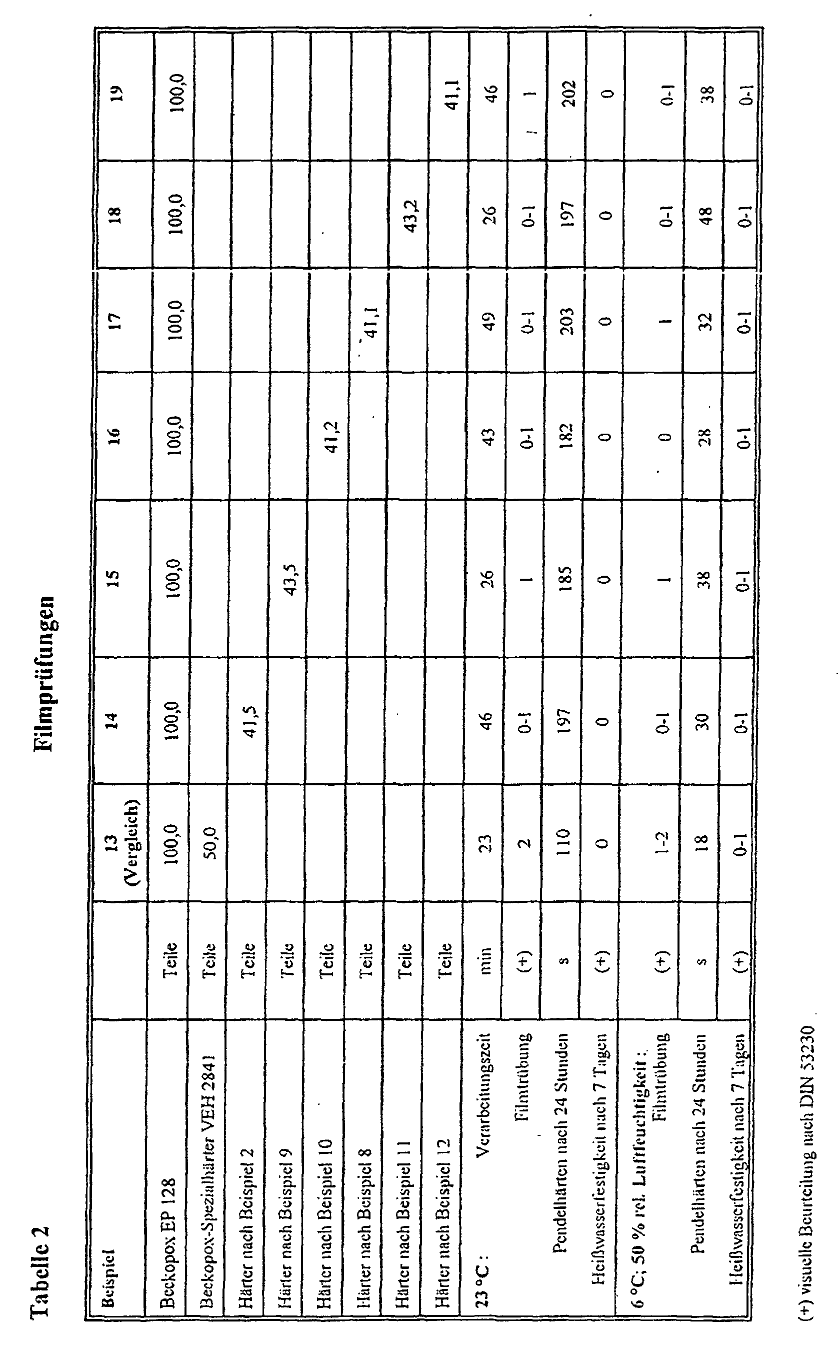

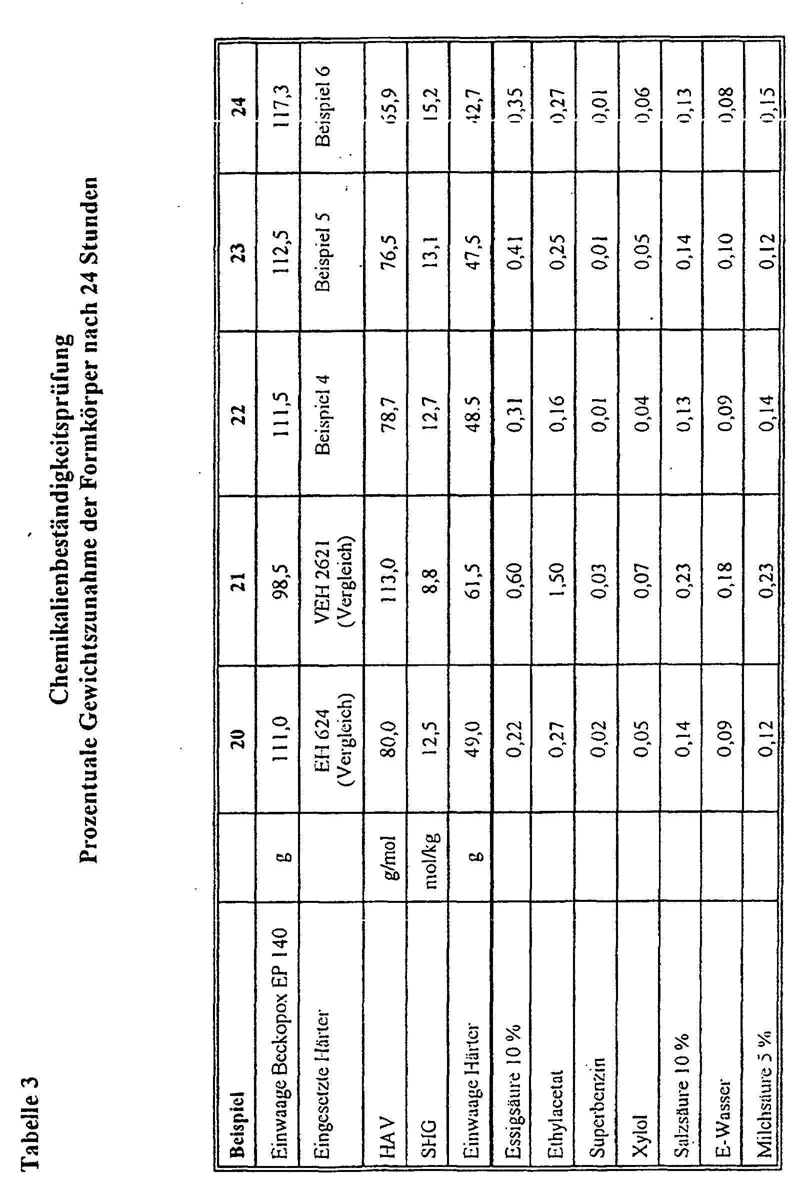

### Herstellung der Filme

Entsprechend den in Tabelle 2 angegebenen Mengenverhältnissen werden Harz und Härter homogen verrührt, als 250 µm Schicht auf Glasplatten aufgetragen, bei den angegebenen Temperaturen härten gelassen und geprüft.

### Chemikalienbeständigkeitsprüfung

20±0,1 g der Mischung von Harz und Härter werden entsprechend dem Mischungsverhältnis eingewogen, 3 bis 5 Minuten mit einem Spatel langsam verrührt (keine Luftblasen) und in eine zylindrische Form von 70 mm Durchmesser gegossen. Die Masse wird mindestens 24 Stunden bei Raumtemperatur und anschließend 5 Stunden bei 60 °C ausgehärtet. Die ca. 4 mm starke Platte wird entformt, gewogen (Analysenwaage) und in das Medium eingestellt. Der Formkörper muß dabei über die gesamte Lagerungszeit vollständig von der Flüssigkeit bedeckt sein. Bestimmt wird die Gewichtszunahme bezogen auf den Ausgangswert in % hier nach 24 h. Dies geschieht immer nach dem gleichen Verfahrensmodus (Vergleichbarkeit). Hier werden die entnommenen Prüfkörper mit fusselfreiem Zellstoff abgetrocknet, 10 Minuten abgelüftet und dann sofort gewogen (und wieder in das Medium eingestellt, falls die Gewichtszunahmen über längere Zeiträume kontrolliert werden soll).

### Beurteilung der Filmprüfung (Tabelle 2)

Die Härter der Beispiele 14 und 17 zeigen gegenüber dem Vergleich (Beispiel 13) längere Verarbeitungszeit und deutlich verbesserte Filmeigenschaften (Trübung geringer, erheblich verbesserte Pendelhärte) bei Raumtemperatur sowie bei + 6°C.

Die Beispiele 15 und 18 (Salicylsäure-modifiziert) entsprechen in der Härtermenge den Beispielen 14 und 17, im Vergleich wird durch den Zusatz an Salicylsäure die Verarbeitungszeit wieder verringert, gewünschte Zwischenwerte in der Verarbeitungszeit sind so einstellbar. Während die Pendelhärten bei Raumtemperatur geringfügig erniedrigt sind gegenüber den Beispielen 14 und 17, sind diese bei 6 °C deutlich höher als die Pendelhärten mit den unmodifizierten Härtern.

Die Beispiele 16 und 19 (Octylamin-moditiziert) zeigen gegenüber den Beispielen 14 und 17 eine Verarbeitungszeit wieder auf, gleichem Niveau, ebenso sind die Pendelhärten bei Raumtemperatur und 6 °C auf gleichem Niveau wie die der Vergleichsbeispiele. Die Filmtrübung bei 5° C ist vorteilhaft verändert gegenüber den Vergleichsbeispielen.

### Beurteilung der Chemikalienbeständigkeitsprüfung

An den Beispielen 22 bis 24 kann gezeigt werden, daß die Gewichtszunahmen in allen Medien geringer sind als im Vergleichsbeispiel 21 (Epoxid-Amin-Addukt-Härter) und mit Ausnahme des Mediums 10%ige Essigsäure mindestens gleichwertige Ergebnisse liefern gegenüber dem Vergleichsbeispiel 20 (Mannich-Basen-Härter). Die erfindungsgemäß hergestellten Härter bewirken damit eine überraschend hohe Chemikalienbeständigkeit der mit ihnen gehärteten Harz-Zusammensetzungen.

## Patentansprüche

1. Verfahren zur Herstellung von Härtungsmitteln mit aktiven Aminwasserstoffgruppen für Epoxidharze, **dadurch gekennzeichnet, daß** im ersten Schritt polyfunktionelle Epoxide (A1) mit mehr als zwei 1,2-Epoxidgruppen pro Molekül mit Monohydroxyaromaten (A2) zu Verbindungen (A) mit durchschnittlich mehr als einer 1,2-Epoxidgruppe pro Molekül umgesetzt werden, wobei die Umsetzung solange geführt wird, bis der Epoxidgruppengehalt einen konstanten Wert erreicht hat, und die Verbindungen (A) im zweiten Schritt umgesetzt werden mit einem Überschuß von Aminen (B), die mindestens zwei primäre Aminogruppen oder mindestens eine primäre Aminogruppe und mindestens eine sekundäre Aminogruppe aufweisen.

2. Verfahren nach Anspruch 1, **dadurch gekennzeichnet, daß** als Komponente (A1) ein Glycidyläther eines Novolaks (A11) mit mindestens zwei Glycidyläthergruppen eingesetzt wird.

3. Verfahren nach Anspruch 2, **dadurch gekennzeichnet, daß** ein Novolak (A11) mit mindestens zwei Hydroxylgruppen eingesetzt wird.

4. Verfahren nach Anspruch 1, **dadurch gekennzeichnet, daß** als Monohydroxyaromaten (A2) einkernige Hydroxyaromaten eingesetzt werden.

5. Verfahren nach Anspruch 4, **dadurch gekennzeichnet, daß** Phenol als Komponente (A2) eingesetzt wird.

6. Verfahren nach Anspruch 1, **dadurch gekennzeichnet, daß** ein mindestens einfach substituiertes Phenol als Komponente (A2) eingesetzt wird, wobei die Substituenten unabhängig voneinander ausgewählt sind aus linearen und verzweigten Alkylresten mit 1 bis 20 Kohlenstoffatomen, aus linearen und verzweigten Alkoxyresten mit 1 bis 8 Kohlenstoffatomen sowie mit solchen Alkyl- und/oder Alkoxyresten substituierten Arylresten, die mit dem Phenol über eine direkte Bindung, eine Äther-, Thioäther-, Carbonyl-, Sulfonyl-, Alkylen-, Carbonamid- oder Carbonyloxy-Brücke verknüpft sein können.

7. Verfahren nach Anspruch 1, **dadurch gekennzeichnet, daß** im ersten Schritt die Komponenten (A1) und (A2) in solchen Mengen eingesetzt werden, daß die Komponente (A) im Mittel 1,3 bis 2, Epoxidgruppen pro Molekül aufweist.

8. Verfahren zur Herstellung von Härtungsmitteln mit aktiven Aminwasserstoffgruppen für Epoxidharze, **dadurch gekennzeichnet, daß** im ersten Schritt polyfunktionelle Epoxide (A1) mit mehr als zwei 1,2-Epoxidgruppen pro Molekül mit Monohydroxyaromaten (A2) zu Verbindungen (A) mit durchschnittlich mehr als einer 1,2-Epoxidgruppe pro Molekül umgesetzt werden, wobei die Umsetzung solange gerührt wird, bis der Epoxidgruppengehalt einen konstanten Wert erreicht hat, sodann von (A) unterschiedliche Epoxidverbindungen (A') mit mindestens zwei 1,2-Epoxidgruppen pro Molekül zugemischt werden und diese Mischung von Verbindungen (A) und Epoxiden (A') im zweiten Schritt umgesetzt wird mit einem Überschuß von Aminen (B), die mindestens zwei primäre Aminogruppen oder mindestens eine primäre Aminogruppe und mindestens eine sekundäre Aminogruppe aufweisen.

9. Verfahren nach Anspruch 8, **dadurch gekennzeichnet**, als Komponente (A') Glycidyläther von Bisphenol A und/oder Bisphenol F und/oder deren Reaktionsprodukte mit weiterem Bisphenol A und/oder Bisphenol F mit einem spezifischen Epoxidgruppen-Gehalt von 4500 bis 6000 mmol/kg eingesetzt werden.

10. Verfahren nach Anspruch 1, **dadurch gekennzeichnet, daß** als Amine (B) solche eingesetzt werden, deren Aminogruppen an einem aliphatischen Kohlenstoffatom gebunden sind.

11. Verfahren nach Anspruch 1, **dadurch gekennzeichnet, daß** als Amin (B) Amine eingesetzt werden mit mindestens einer primären Aminogruppe und mindestens einer sekundären Aminogruppe, die jeweils an einem aliphatischen Kohlenstoffatom gebunden sind.

12. Verfahren nach Anspruch 1, **dadurch gekennzeichnet, daß** als Amin (B) Aminen eingesetzt werden mit mindestens zwei primären Aminogruppen, die jeweils an einem aliphatischen Kohlenstoffatom gebunden sind.

13. Verfahren nach Anspruch 1, **dadurch gekennzeichnet, daß** als Amin (B) 1,3-Bis-aminomethylbenzol, Isophorondiamin, Aminoäthylpiperazin, deren Gemische und/oder deren Mischungen mit anderen diprimären Aminen eingesetzt werden.

14. Verfahren nach Anspruch 8, **dadurch gekennzeichnet, daß** als Amine (B) solche eingesetzt werden, deren Aminogruppen an einem aliphatischen Kohlenstoffatom gebunden sind.

15. Verfahren nach Anspruch 8, **dadurch gekennzeichnet, daß** als Amin (B) Amine eingesetzt werden mit mindestens einer primären Aminogruppe und mindestens einer sekundären Aminogruppe, die jeweils an einem aliphatischen Kohlenstoffatom gebunden sind.

16. Verfahren nach Anspruch 8, **dadurch gekennzeichnet, daß** als Amin (B) Aminen eingesetzt werden mit mindestens zwei primären Aminogruppen, die jeweils an einem aliphatischen Kohlenstoffatom gebunden sind.

17. Verfahren nach Anspruch 8, **dadurch gekennzeichnet, daß** als Amin (B) 1,3-Bis-aminomethylbenzol, Isophorondiamin, Aminoäthylpiperazin, deren Gemische und/oder deren Mischungen mit anderen diprimären Aminen eingesetzt werden.

18. Verwendung von gemäß Anspruch 1 oder Anspruch 8 hergestellten Härtungsmitteln zum Härten von Epoxidharzen.

19. Verwendung nach Anspruch 18, **dadurch gekennzeichnet, daß** dem Härtungsmittel zusätzlich Salicylsäure zugemischt wird.

20. Verwendung nach Anspruch 18, **dadurch gekennzeichnet, daß** dem Härtungsmittel zusätzlich aliphatische Monoamine mit 4 bis 20 Kohlenstoffatomen zugemischt werden.

## Claims

1. A process for preparing hardeners having active amine hydrogen groups for epoxy resins, which comprises reacting in the first step polyfunctional epoxides (A1) having more than two 1,2-epoxide groups per molecule with monohydroxyaromatic compounds (A2) to give compounds (A) having on average more than one 1,2-epoxide group per molecule, the reaction being continued until the epoxide group content has reached a constant value, and in the second step reacting the compounds (A) with an excess of amines (B) which have at least two primary amino groups or at least one primary amino group and at least one secondary amino group.

2. The process as claimed in claim 1, wherein component (A1) is a glycidyl ether of a novolak (A11) having at least two glycidyl ether groups.

3. The process as claimed in claim 2, wherein a novolak (A11) having at least two hydroxyl groups is used.

4. The process as claimed in claim 1, wherein monocyclic hydroxyaromatic compounds are used as monohydroxyaromatic compounds (A2).

5. The process as claimed in claim 4, wherein phenol is used as component (A2).

6. The process as claimed in claim 1, wherein an at least monosubstituted phenol is employed as component (A2), the substituents being selected independently of one another from linear and branched alkyl radicals having 1 to 20 carbon atoms, from linear and branched alkoxy radicals having 1 to 8 carbon atoms and from aryl radicals which are substituted by such alkyl and/or alkoxy radicals and can be linked to the phenol by way of a direct bond or an ether, thioether, carbonyl, sulfonyl, alkylene, carboxamide or carbonyloxy bridge.

7. The process as claimed in claim 1, wherein components (A1) and (A2) are used in the first step in amounts such that component (A) has on average from 1.3 to 2.7 epoxide groups per molecule.

8. A process for preparing hardeners having active amine hydrogen groups for epoxy resins, which comprises reacting in the first step polyfunctional epoxides (A1) having more than two 1,2-epoxide groups per molecule with monohydroxyaromatic compounds (A2) to give compounds (A) having on average more than one 1,2-epoxide group per molecule, the reaction being continued until the epoxide group content has reached a constant value, then admixing epoxide compounds (A') which are different from (A) and have at least two 1,2-epoxide groups per molecule, and in the second step reacting this mixture of compounds (A) and epoxides (A') with an excess of amines (B) which have at least two primary amino groups or at least one primary amino group and at least one secondary amino group.

9. The process as claimed in claim 8, wherein use is made as component (A') of glycidyl ethers of bisphenol A and/or bisphenol F and/or reaction products thereof with further bisphenol A and/or bisphenol F having a specific epoxide group content of from 4500 to 6000 mmol/kg.

10. The process as claimed in claim 1, wherein use is made as amines (B) of those whose amino groups are attached to an aliphatic carbon atom.

11. The process as claimed in claim 1, wherein use is made as amine (B) of amines having at least one primary amino group and at least one secondary amino group, each of which is attached to an aliphatic carbon atom.

12. The process as claimed in claim 1, wherein use is made as amine (B) of amines having at least two primary amino groups, each of which is attached to an aliphatic carbon atom.

13. The process as claimed in claim 1, wherein use is made as amine (B) of 1,3-bisaminomethylbenzene, isophoronediamine, aminoethylpiperazine, their mixtures and/or mixtures thereof with other diprimary amines.

14. The process as claimed in claim 8, wherein use is made as amines (B) of those whose amino groups are attached to an aliphatic carbon atom.

15. The process as claimed in claim 8, wherein use is made as amine (B) of amines having at least one primary amino group and at least one secondary amino group, each of which is attached to an aliphatic carbon atom.

16. The process as claimed in claim 8, wherein use is made as amine (B) of amines having at least two primary amino groups, each of which is attached to an aliphatic carbon atom.

17. The process as claimed in claim 8, wherein use is made as amine (B) of 1,3-bisaminomethylbenzene, isophoronediamine, aminoethylpiperazine, their mixtures and/or mixtures thereof with other diprimary amines.

18. The use of hardeners prepared according to claim 1 or claim 8 for curing epoxy resins.

19. The use as claimed in claim 18, wherein salicyclic acid is admixed additionally to the hardener.

20. The use as claimed in claim 18, wherein aliphatic monoamines having 4 to 20 carbon atoms are admixed additionally to the hardener.

## Revendications

1. Procédé pour la préparation d'agents durcisseurs avec des groupes hydrogène d'amine actifs pour des résines époxydes, **caractérisé en ce qu'**on fait réagir dans la première étape des époxydes polyfonctionnels (A1) présentant plus de deux groupes 1,2-époxydes par molécule sur des composés monohydroxyaromatiques (A2) pour obtenir des composés (A) présentant en moyenne plus d'un groupe 1,2-époxyde par molécule, en conduisant la réaction jusqu'à ce que la teneur en groupes époxydes ait atteint une valeur constante et on fait réagir les composés (A) dans la seconde étape sur un excès en amines (B) qui présentent au moins deux groupes amino primaires ou au moins un groupe amino primaire et au moins un groupe amino secondaire.

2. Procédé selon la revendication 1, **caractérisé en ce qu'**on utilise en tant que composant (A1) un éther glycidylique d'une novolaque (A11) présentant au moins deux groupes éther glycidylique.

3. Procédé selon la revendication 2, **caractérisé en ce qu'**on utilise une novolaque (A11) présentant au moins deux groupes hydroxyle.

4. Procédé selon la revendication 1, **caractérisé en ce qu'**on utilise en tant que composés monohydroxyaromatiques (A2) des composés hydroxy-aromatiques mononucléaires.

5. Procédé selon la revendication 4, **caractérisé en ce qu'**on utilise le phénol en tant que composant (A2).

6. Procédé selon la revendication 1, **caractérisé en ce qu'**on utilise un phénol au moins une fois substitué en tant que composant (A2), les substituants étant pris indépendamment les uns des autres parmi les restes alkyles linéaires ou ramifiés présentant 1 à 20 atomes de carbone, parmi les restes alkoxy linéaires ou ramifiés présentant 1 à 8 atomes de carbone, ainsi que parmi de tels restes aryles substitués par des restes alkyles et/ou alkoxy, qui peuvent être reliés au phénol par l'intermédiaire d'une liaison directe, d'un pont éther, thioéther, carbonyle, sulfonyle, alkylène, carboxamide ou carbonyloxy.

7. Procédé selon la revendication 1, **caractérisé en ce qu'**on utilise dans la première étape les composants (A1) et (A2) dans de telles quantités que le composant (A) présente en moyenne 1,3 à 2,7 groupes époxydes par molécule.

8. Procédé pour la préparation d'agents durcisseurs avec des groupes hydrogène d'amine actifs pour des résines époxydes, **caractérisé en ce qu'**on fait réagir dans la première étape des époxydes polyfonctionnels (A1) présentant plus de deux groupes 1,2-époxydes par molécule sur des composés monohydroxyaromatiques (A2) pour obtenir des composés (A) présentant en moyenne plus d'un groupe 1,2-époxyde par molécule, en conduisant la réaction jusqu'à ce que la teneur en groupes époxydes ait atteint une valeur constante, puis en ajoutant par mélange des composés époxydes (A') différents de (A) présentant au moins deux groupes 1,2-époxydes par molécule et en faisant réagir ce mélange de composé (A) et d'époxydes (A') dans une seconde étape sur un excès en amines (B), qui présentent au moins deux groupes amino primaires ou au moins un groupe amino primaire et au moins un groupe amino secondaire.

9. Procédé selon la revendication 8, **caractérisé en ce qu'**on utilise en tant que composant (A') des éthers glycidyliques du bisphénol A et/ou bisphénol F et/ou leurs produits réactionnels avec un autre bisphénol A et/ou bisphénol F ayant une teneur spécifique en groupes époxydes de 4500 à 6000 moles/kg.

10. Procédé selon la revendication 1, **caractérisé en ce qu'**on utilise en tant qu'amine (B) de telles dont les groupes amino sont liés à un atome de carbone aliphatique.

11. Procédé selon la revendication 1, **caractérisé en ce qu'**on utilise en tant qu'amine (B) des amines présentant au moins un groupe amino primaire et au moins un groupe amino secondaire, qui sont chacun liés à un atome de carbone aliphatique.

12. Procédé selon la revendication 1, **caractérisé en ce qu'**on utilise en tant qu'amine (B) des amines présentant au moins deux groupes amino primaires, qui sont chacun lié à un atome de carbone aliphatique.

13. Procédé selon la revendication 1, **caractérisé en ce qu'**on utilise en tant qu'amine (B) le 1,3-bis-aminométhylbenzène, l'isophoronediamine, l'aminoéthylpipérazine, leurs mélanges et/ou leurs mélanges avec d'autres amines diprimaires.

14. Procédé selon la revendication 8, **caractérisé en ce qu'**on utilise en tant qu'amines (B) de tels dont les groupes amino sont liés à un atome de carbone aliphatique.

15. Procédé selon la revendication 8, **caractérisé en ce qu'**on utilise en tant qu'amine (B) des amines présentant au moins un groupe amino primaire et au moins un groupe amino secondaire, qui sont chacun liés à un atome de carbone aliphatique.

16. Procédé selon la revendication 8, **caractérisé en ce qu'**on utilise en tant qu'amine (B) des amines présentant au moins deux groupes amino primaires, qui sont chacun liés à un atome de carbone aliphatique.

17. Procédé selon la revendication 8, **caractérisé en ce qu'**on utilise en tant qu'amine (B) le 1,3-bis-aminométhylbenzène, l'isophoronediamine, l'aminoéthylpipérazine, leurs mélanges et/ou leurs mélanges avec d'autres amines diprimaires.

18. Utilisation d'agents durcisseurs préparés selon la revendication 1 ou la revendication 8 pour le durcissement de résines époxydes.

19. Utilisation selon la revendication 18, **caractérisée en ce qu'**on ajoute au durcisseur en plus l'acide salicylique.

20. Utilisation selon la revendication 18, **caractérisée en ce qu'**on ajoute au durcisseur en plus des monoamines présentant 4 à 20 atomes de carbone.
